# EUROPÄISCHE PATENTSCHRIFT

(11) **EP 0 973 974 B1**
(45) Veröffentlichungstag und Bekanntmachung des Hinweises auf die Patenterteilung: **13.11.2002**
(21) Anmeldenummer: 98913745.0
(22) Anmeldetag: 01.04.1998
(51) Int. Cl.: E02D 3/074

(54) **ARBEITSGERÄT, INSBESONDERE STAMPFGERÄT ZUR BODENVERDICHTUNG ODER HAMMER**
WORKING TOOL, IN PARTICULAR SOIL RAMMER OR HAMMER
OUTIL, NOTAMMENT PILONNEUSE POUR COMPACTER LE SOL OU MARTEAU

(30) Priorität: 09.04.1997 DE 19714555
(43) Veröffentlichungstag der Anmeldung: 26.01.2000
(73) Patentinhaber: WACKER-WERKE GMBH & CO. KG, 80809 München (DE)
(72) Erfinder: GREPPMAIR, Martin, D-80935 München (DE)
(74) Vertreter: Müller - Hoffmann & Partner
(86) Internationale Anmeldenummer: EP9801892
(87) Internationale Veröffentlichungsnummer: WO98045540

(56) Entgegenhaltungen:
- DE-A- 1 925 870
- FR-A- 1 254 008
- GB-A- 2 159 236

## Beschreibung

Die Erfindung betrifft ein Arbeitsgerät, insbesondere ein Stampfgerät zur Bodenverdichtung oder einen Hammer, mit einer von einem zur Obermasse gehörenden Motor über einen Kurbeltrieb und einen Federsatz linear hin- und hergehend angetriebenen, stampfenden oder schlagenden Arbeitsmasse.

Bekannte Stampfgeräte dieser Art sind so ausgelegt, daß die Obermasse etwa zwei Drittel und die schlagende Arbeits- oder Untermasse ein Drittel der gesamten Stampfermasse umfaßt, während die von der Obermasse und der Arbeitsmasse jeweils zurückgelegten Wege in umgekehrtem Verhältnis zueinander stehen. Dabei bewegt sich die Obermasse in der Größenordnung von 25 bis 30 mm.

Diese Bewegung der Obermasse bei einer Frequenz von 10-11 Hz hat negative Auswirkungen, weil sich diese Schwingungen auf den Körper der das Arbeitsgerät über einen Führungsbügel führenden Person, insbesondere auf Hand und Arm, übertragen.

Zwar kann man diese Schwingungsübertragung auf den Körper durch geschicktes Anbringen von Gummielementen größtenteiles abdämpfen, es ergeben sich aber auch hohe Belastungen des angebauten Antriebsmotors unabhängig von dessen Bauart.

Dieses Problem besteht auch beim Anbau des Arbeitsgeräts an andere Geräte oder Fahrzeuge, die durch die auftretenden Vibrationen sehr stark geschädigt werden können.

Die Abgabeleistung des Stampfsystems ist weitgehend von der Obermasse abhängig, da eine zu große Arbeitsmasse oder eine zu hohe Geschwindigkeit der Arbeitsmasse die Obermasse überdimensional bewegt und die vorstehend beschriebenen Probleme verstärkt.

Durch Erhöhung der Obermasse können diese schädlichen Wirkungen teilweise eingedämmt werden, wobei aber das Gesamtgewicht des Stampfers erhöht wird und dadurch der Leistungsbedarf des Antriebsmotors steigt.

Aus der DE-OS 1 925 870 ist ein Stampfgerät bekannt, bei dem ein Stampffuß von einem zu einer Obermasse gehörenden Motor über einen doppelten Kurbeltrieb antreibbar ist. Die Antriebsleistung wird über Zahnräder auf zwei miteinander kämmende Kurbelscheiben verteilt, die über zugeordnete Pleuel jeweils mit dem Stampffuß verbundene Stangen antreiben. An den gegenläufig drehenden Kurbelscheiben sind jeweils Fliehgewichte derart befestigt, daß sich die Horizontalkomponenten der Fliehkräfte gegenseitig aufheben, während sich die Vertikalkomponenten addieren und der auf das Stampfergehäuse durch die Vibration des Stampffußes wirkenden Schwingung entgegenwirken. Die beschriebenen Anordnung erfordert durch die Bereitstellung von zwei die Obermasse mit dem Stampffuß verbindenden Stangen sowie durch die kämmenden Kurbelscheiben einen voluminösen Aufbau. Das Gesamtgewicht des Stampfers ist beträchtlich.

Der Erfindung liegt die Aufgabe zugrunde, ohne wesentliche Erhöhung der Gesamtmasse eine weitestgehende Stabilisierung der Obermasse bei kompakter Bauweise des Arbeitsgeräts zu erreichen.

Diese Aufgabe wird erfindungsgemäß durch ein Arbeitsgerät nach Anspruch 1 und ein ähnliches Arbeitsgerät nach Anspruch 8 gelöst. Vorteilhafte Weiterentwicklungen der Erfindung sind den Unteransprüchen zu entnehmen.

Gemäß Anspruch 1 ist das Arbeitsgerät dadurch gekennzeichnet, daß das zweite Fliehgewicht um eine im wesentlichen koaxial zur Drehachse des Kurbeltriebs angeordnete Drehachse drehbar angeordnet ist. Das bedeutet, daß die Gegenmasse aus dem direkt auf der Drehachse des Kurbeltriebs sitzenden ersten Fliehgewicht und dem dahinter angeordneten zweiten Fliehgewicht besteht, das etwa das gleiche Schwungmoment aufweist wie das erste Fliehgewicht und um eine gegen die Drehachse des Kurbeltriebs parallel zu der Bewegungsrichtung der Arbeitsmasse etwas versetzte Drehachse im Gegensinn zum ersten Fliehgewicht angetrieben ist.

Eine andere Ausführungsform der Erfindung ist gemäß Patentanspruch 8 dadurch gekennzeichnet, daß die Gegemasse parallel zu der Bewegungsrichtung der Arbeitsmasse mit einer Phasenverschiebung ungleich 180° relativ zu der Bewegung der Arbeitsmasse linear hin- und herbewegbar ist.

Die Obermasse wird von einem sich selbst an seinem Gehäuse abstützenden Kurbeltrieb in dem Augenblick nach oben gedrückt, in dem der Kurbeltrieb über sein Pleuel, einen Führungskolben und einen Federsatz die Arbeitsmasse und damit den Stampffuß nach unten drückt. Der Federsatz hat zur Folge, daß bei der Abwärtsbewegung des Führungskolbens zunächst diese Federn unter Energieaufnahme gespannt werden, worauf sie mit einer dadurch bedingten Verzögerung anschließend die gespeicherte Energie wieder zur Abwärtsbelastung des Stampffußes abgeben. Diese Verzögerung muß berücksichtigt werden, wenn die Bewegung der Gegenmasse auf die Bewegung der Arbeitsmasse möglichst genau abgestimmt werden soll. Wenn die Arbeitsmasse durch den Kurbelzapfen des Kurbeltriebs wieder nach oben gezogen wird, wird die Obermasse nach unten bewegt.

Eine weitere vorteilhafte Ausgestaltung besteht deshalb darin, daß die Bewegung des mit dem Kurbeltrieb verbundenen Endes des Federsatzes und die Bewegung der Gegenmasse bezogen auf den Kurbelwinkel um 180° minus einer aus den Konstruktionsparametern des Federsatzes abgeleiteten Phasenverschiebung gegeneinander versetzt sind.

Durch den Kurbeltrieb wird eine Schwingbewegung der Obermasse relativ zur Arbeitsmasse aufgebaut und erst wenn die mit dem Federsatz verbundene Kurbel ihren dem Federsatz zugewandten Scheitelpunkt überschreitet, wird die bis dahin im Federsatz gespeicherte Energie als Stampf- oder Schlagenergie freigesetzt, so daß also erst zu diesem Zeitpunkt die Gegenbewegung der Gegenmasse zur Dämpfung der Bewegung der Obermasse erwünscht ist, d.h. die Bewegung der Gegenmasse in ihre von der Arbeitsmasse am weitesten entfernte Position soll erst erfolgen, wenn die mit dem Federsatz verbundene Kurbel diesen dem Federsatz zugewandten Scheitelpunkt durchlaufen hat. Dies wird durch die vorstehend beschriebene Phasenverschiebung erreicht, die in der Praxis zumindest näherungsweise auf die Konstruktionsparameter abgestimmt werden muß.

Nach einer zweckmäßigen Ausgestaltung ist die Gegenmasse an der Obermasse parallel zur Bewegungsrichtung der Arbeitsmasse geführt. Dabei besteht eine vorteilhafte Ausführungsform darin, daß die Gegenmasse von einem Ausgleichsexzenter am Kurbeltrieb angetrieben ist, und zwar beispielsweise über eine Pleuelstange. Nach einer anderen zweckmäßigen Ausgestaltung kann die Verbindung zwischen der Gegenmasse und dem Ausgleichsexzenter als Kurbelschleife ausgeführt sein.

Nach einer anderen zweckmäßigen Variante besteht die Gegenmasse aus zwei jeweils auf der einen bzw. anderen Seite des Kurbeltriebs auf etwa gleicher Höhe bezüglich der Drehachse des Kurbeltriebs angeordneten Teilmassen und jede Teilmasse ist von einem Exzenterzapfen an einer ihr zugeordneten, mit dem Kurbeltrieb drehbar gekoppelten Exzenterscheibe angetrieben, wobei die Verbindung zwischen dem Exzenterzapfen und der zugehörigen Teilmasse jeweils als Kurbelschleife ausgeführt ist.

Eine weitere vorteilhafte Variante besteht darin, daß die Gegenmasse aus an der Obermasse um zueinander parallele Achsen drehbar gelagerten, gegensinnig rotierend vom Kurbeltrieb angetriebenen Unwuchten besteht, deren Schwungmoment und gegenseitige Phasenlage so eingerichtet sind, daß sie eine der Arbeitsmasse entgegenwirkend gerichtete Schwingung erzeugen, wobei eine weitere Ausgestaltung darin besteht, daß die Gegenmasse aus zwei symmetrisch zur Bewegungsrichtung der Arbeitsmasse nebeneinander auf etwa gleicher Höhe in dieser Richtung angeordneten, gegensinnig drehbar direkt miteinander gekoppelten, vom Kurbeltrieb angetriebenen Fliehgewichten besteht.

Eine andere zweckmäßige Ausführungsform zur Vermeidung von Seitenkräften besteht darin, daß die Gegenmasse aus einem direkt auf der Welle des Kurbeltriebs sitzenden ersten Fliehgewicht und zwei symmetrisch zur Bewegungsrichtung der Arbeitsmasse nebeneinander auf etwa gleicher Höhe in dieser Richtung angeordneten zweiten Fliehgewichten von untereinander gleichem Schwungmoment besteht, die im Gegensinn zum ersten Fliehgewicht drehbar vom Kurbeltrieb angetrieben sind und deren Schwungmoment jeweils etwa halb so groß ist wie das Schwungmoment des ersten Fliehgewichts.

Anhand der nun folgenden Beschreibung der in der Zeichnung dargestellten Ausführungsbeispiele der Erfindung wird diese näher erläutert.

Es zeigen:
Fig. 1 eine Seitenansicht einer ersten Ausführungsform eines erfindungsgemäß ausgestalteten Stampfers quer zur Kurbelachse, teilweise geschnitten in einer die Kurbelachse enthaltenden Ebene,
Fig. 2 einen Detailschnitt durch das Gehäuse des Kurbeltriebs der in Fig. 1 gezeigten Ausführungsform in einer zur Kurbelachse rechtwinkligen Ebene,
Fig. 3 eine der Fig. 1 ähnliche Ansicht des oberen Endes eines Stampfers nach einer zweiten Ausführungsform,
Fig. 4 eine der Fig. 2 ähnliche Schnittansicht der zweiten Ausführungsform.
Fig. 5 eine der Fig. 4 ähnliche Schnittansicht bei einer dritten Ausführungsform,
Fig. 6 eine der Fig. 4 ähnliche Schnittansicht bei einer vierten Ausführungsform,
Fig. 7 eine der Fig. 4 ähnliche Schnittansicht bei einer fünften Ausführungsform,
Fig. 8 eine der Fig. 3 ähnliche Ansicht des oberen Endes eines Stampfers nach einer sechsten Ausführungsform und
Fig. 9 eine der Fig. 4 ähnliche Ansicht der sechsten Ausführungsform.

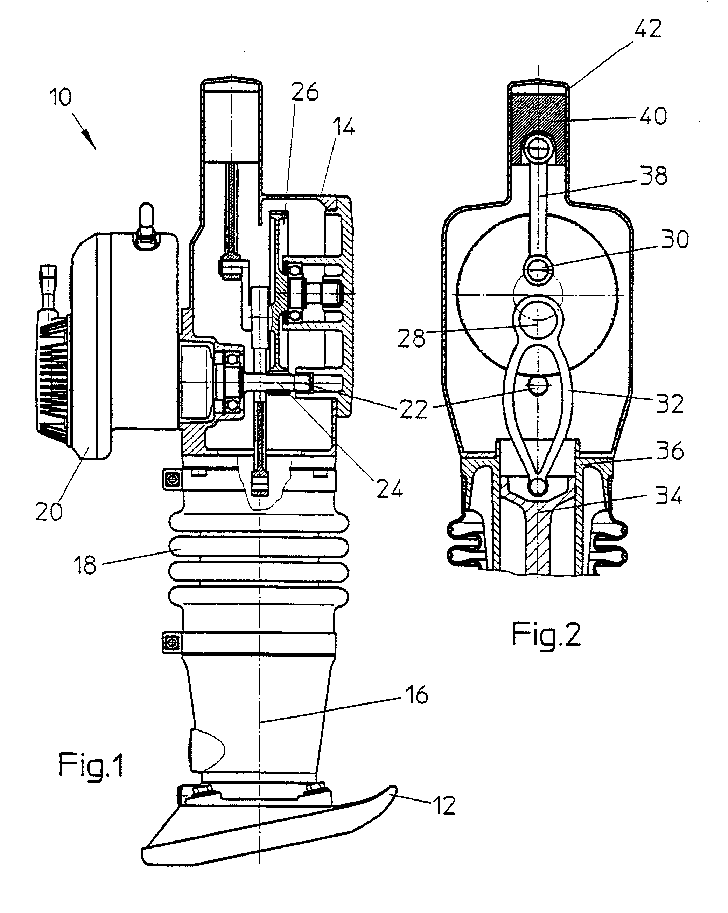

Bei dem in Fig. 1 gezeigten, insgesamt mit 10 bezeichneten Stampfer ist im Interesse der Übersichtlichkeit der Führungsbügel nicht dargestellt. Der Stampfer 10 endet unten in einem Stampffuß 12, der gegenüber dem im oberen Bereich des Stampfers 10 gezeigten Kurbelgehäuse 14 eine in Richtung der Bewegungsachse 16 hin- und hergehende Bewegung ausführen kann, weshalb die äußere Verkleidung des Geräts einen faltenbalgartigen Abschnitt 18 aus einem elastischen Material aufweist.

An einer Seite des Kurbelgehäuses 14 ist ein Antriebsmotor 20 befestigt, der eine Antriebswelle 22 treibt, die mit einem Zahnritzel 24 versehen ist, das mit einer am Umfang verzahnten Kurbelscheibe 26 in Eingriff steht. Die Kurbelscheibe 26 trägt zwei um etwa 180° versetzte Kurbelzapfen 28 und 30 (Fig. 2). Der Kurbelzapfen 28 ist über ein bügelförmiges, die Antriebswelle 22 umgreifendes Pleuel 32 mit einem Führungskolben 34 verbunden, der in einer mit dem Kurbelgehäuse 14 verbundenen Kolbenführung 36 in Richtung der Achse 16 beweglich angeordnet ist und - in Fig. 1 durch den faltenbalgartigen Abschnitt 18 verdeckt - über einen Federsatz mit dem Stampffuß 12 verbunden ist. Mit dem als Ausgleichsexzenter dienenden Kurbelzapfen 30 ist über ein Pleuel 38 ein Kolben 40 verbunden, der ebenfalls in Richtung der Achse 16 beweglich in einer Kolbenführung 42 angeordnet ist und zusammen mit dem Pleuel 38 die erfindungsgemäß vorgesehene Gegenmasse zur Arbeitsmasse bildet.

In Fig. 2 ist zwischen den Kurbelzapfen 28 und 30 ein Winkelabstand von 180° gezeigt. Dadurch würde der Kolben bzw. die Gegenmasse 40 den oberen Totpunkt erreichen, wenn der mit dem nicht gezeigten Federsatz verbundene Führungskolben 34 seinen unteren Totpunkt erreicht. Aus den bereits geschilderten Gründen soll der Kolben 40 aber abhängig von konstruktiven Merkmalen des Federsatzes den oberen Totpunkt zeitlich verzögert erreichen, weshalb der Winkelabstand um einen gewissen Phasenverschiebungswinkel kleiner als 180° gewählt werden muß. In der Praxis kann dieser Phasenverschiebungswinkel 70-100° betragen.

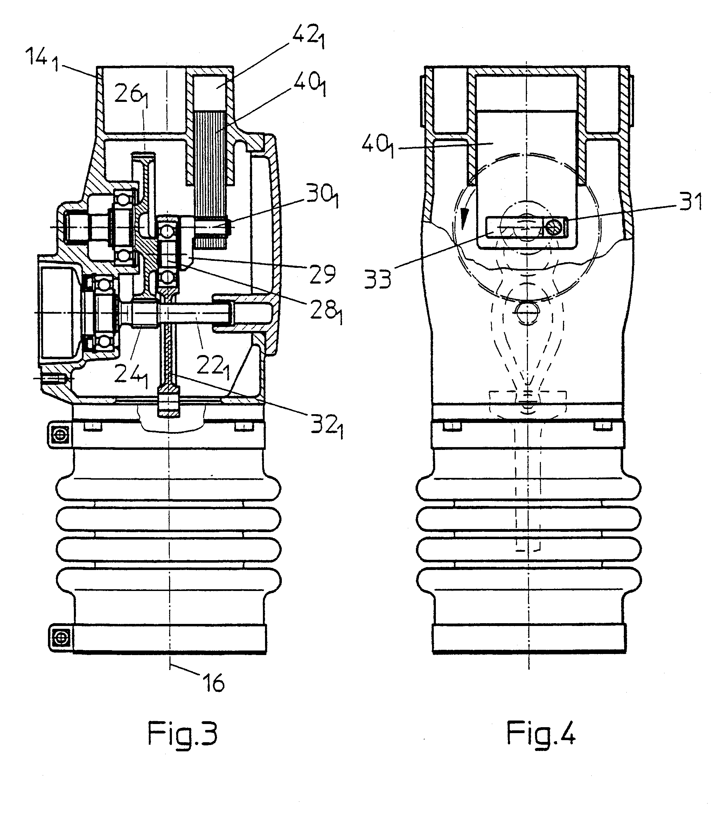

Bei der in den Fig. 3 und 4 dargestellten Variante ist die mit dem Zahnritzel 24₁ auf der Antriebswelle 22₁ in Eingriff stehende Kurbelscheibe 26₁ mit einer zur Ausbildung der Kurbelzapfen 28₁ und 30₁ gekröpften Kurbel 29 versehen, wobei der das freie Ende der Kurbel 29 bildende Kurbelzapfen 28₁ in einen Gleitstein 31 eingreift, der in einem Führungsschlitz 33 verschiebbar angeordnet ist, der in einem als Gegenmasse dienenden Kolben 40₁ ausgebildet ist. Der Kolben 40₁ ist in einer am Kurbelgehäuse 14₁ ausgebildeten Führung 42₁ parallel zur Bewegungsachse 16 beweglich geführt. Auf dem Kurbelzapfen 28₁ ist das Pleuel 32₁ zur Verbindung mit dem nicht gezeigten, der Bewegungsübertragung auf den Federsatz dienenden Führungskolben gelagert. Die Funktionsweise dieser Variante entspricht weitgehend der Konstruktion nach den Fig. 1 und 2, erlaubt aber wegen des Antriebs der Gegenmasse durch einen Kurbelschleifentrieb eine in Richtung der Bewegungsachse 16 verkürzte Bauweise.

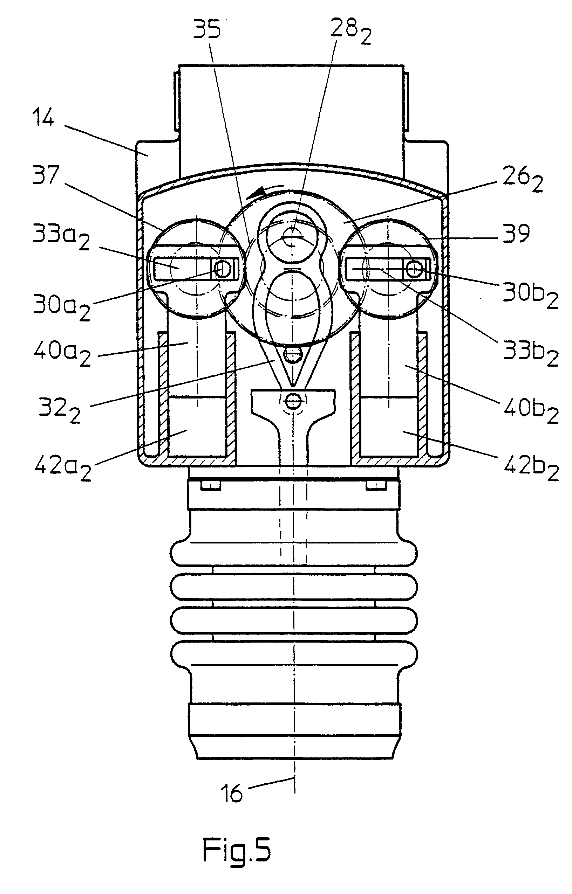

In Fig. 5 ist eine Variante gezeigt, die ebenfalls einen Kurbelschleifenantrieb für die Gegenmasse vorsieht, wobei die Anordnung eine weitere Verkürzung ermöglicht. Die mit dem Kurbelzapfen 28₂ für das Pleuel 32₂ zur Bewegungsübertragung auf den Federsatz versehene Kurbelscheibe 26₂ ist drehfest mit einem koaxial zu ihr angeordneten Zahnrad 35 verbunden, mit dem beiderseits der Bewegungsachse 16 und in Bezug auf diese in gleicher Höhe zwei am Umfang verzahnte Exzenterscheiben 37 und 39 in Eingriff stehen. Die Exzenterscheiben tragen jeweils einen Exzenterzapfen 30a₂ bzw. 30b₂, die in ihnen zugeordnete Führungsschlitze 33a₂ bzw. 33b₂ zweier identisch auegebildeter Kolben 40a₂ bzw. 40b₂ eingreifen, die gemeinsam die Gegenmasse bilden und die in ihnen zugeordneten, am Kurbelgehäuse 14₂ ausgebildete Führungen 42a₂ bzw. 42b₂ parallel zur Bewegungsachse verschiebbar gelagert sind.

Die folgenden Varianten ersetzen die linear bewegliche Gegenmasse durch rotierende Unwuchten.

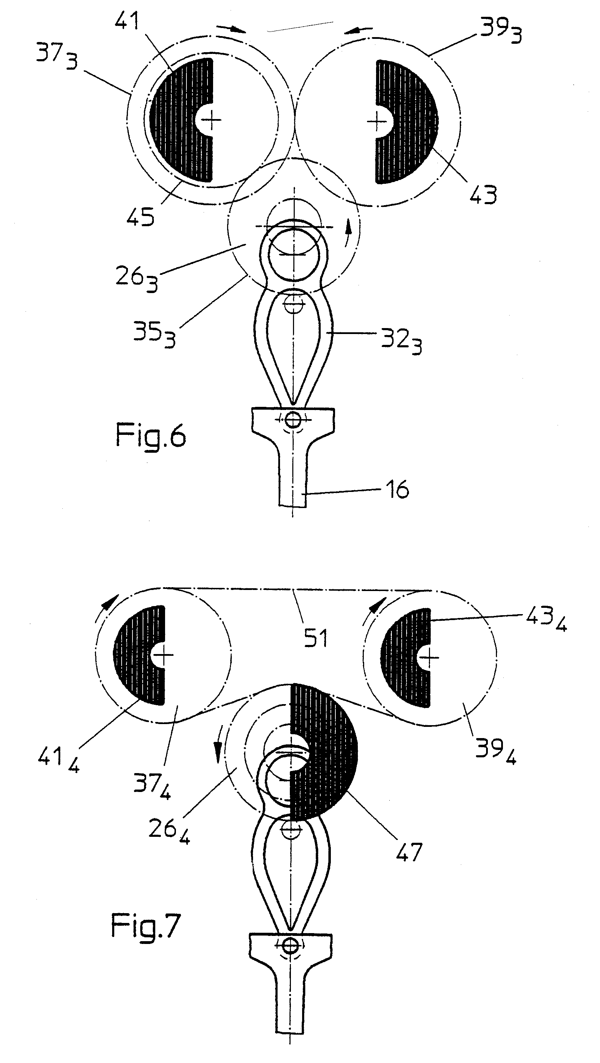

Bei der Variante nach Fig. 6 ist mit der Kurbelscheibe 26₃ für die Betätigung des Pleuels 32₃ drehfest und koaxial ein Zahnrad 35₃ verbunden. Beiderseits der Bewegungsachse 16 und mit gleichem Abstand von dieser sowie in gleicher Höhe in Bezug auf diese sind zwei miteinander in Eingriff stehende Zahnscheiben 37₃ und 39₃ gleicher Größe und Zähnezahl angeordnet, die jeweils mit einem Fliehgewicht 41 bzw. 43 versehen sind. Die Zahnscheibe 37₃ ist drehfest und koaxial mit einem Zahnrad 45 verbunden, das mit dem Zahnrad 35₃ gleicher Zähnezahl in Eingriff steht, so daß sich die beiden Fliehgewichte 41 und 43 in einer vorgegebenen Phasenlage zur Bewegung des Pleuels 32₃ gegenläufig bewegen. Die Fliehgewichte 41 und 43 sind dabei derart angeordnet, daß sich ihre Positionen jeweils spiegelbildlich zur Bewegungsachse 16 gegenüberliegen. Dadurch werden sowohl Seitenkräfte vermieden, wie sie bei den Ausführungsformen nach den Fig. 1 und 2 durch das schrägstehende Pleuel 38 verursacht werden, wie auch Reibungsverluste in den Führungen 33, 33a₂ und 33b₂ nach den Fig. 3 bis 5.

Die Variante nach Fig. 7 zeigt eine nur in einer Richtung wirkende Unwucht am Kurbeltrieb und zwei dazu gegenläufige Unwuchten, die einen Massenausgleich schaffen und somit auch jegliche Seitenbewegung verhindern. Die Unwucht am Kurbeltrieb ist durch das Fliehgewicht 47 an der Kurbelscheibe 26₄ dargestellt. Zwei im Durchmesser mit der Kurbelscheibe 26₄ übereinstimmende, mit Fliehgewichten 41₄ und 43₄ versehene Scheiben 37₄ und 39₄ sind symmetrisch zur Bewegungsachse angeordnet. Die drei Scheiben 264, 37₄ und 39₄ sind durch eine schlupffreie Getriebeverbindung, z.B. eine Kette 51 zu gemeinsamer Bewegung derart verbunden, daß sich die beiden Scheiben 37₄ und 39₄ in gleichem Drehsinn, jedoch gegenläufig zur Kurbelscheibe 26₄ bewegen.

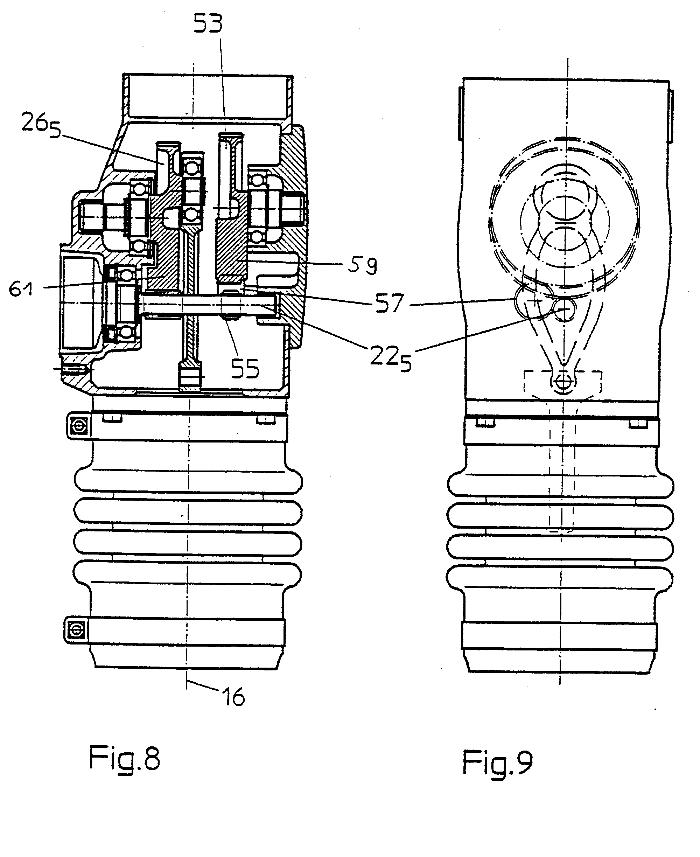

Die Fig. 8 und 9 zeigen eine letzte Variante, die insofern eine Weiterbildung der Variante nach Fig. 7 ist, als die beiden gleichsinnig umlaufenden Scheiben 37₄ und 39₄ nun durch eine einzige Scheibe 53 ersetzt werden, die in Richtung der Antriebsachse 22₅ gegenüber der Kurbelscheibe 26₅ versetzt ist und von der Antriebsachse 22₅ über ein eigenes Ritzel 55 und ein Zwischenrad 57 gegenläufig zur Kurbelscheibe 26₅ angetrieben wird und mit einem Fliehgewicht 59 versehen ist.

## Patentansprüche

1. Arbeitsgerät, mit
- einer Arbeitsmasse (12), die von einem zu einer Obermasse gehörenden Motor (20) über einen Kurbeltrieb (26₅, 28, 30) linear hin- und hergehend antreibbar ist: und mit
- einer Gegenmasse (59, 61), die von dem Motor (20) drehend antreibbar ist und durch die eine einer durch die Bewegung der Arbeitsmasse (12) auf die Obermasse wirkenden Kraft entgegengesetzte Kraft erzeugbar ist, wobei die Gegenmasse ein um eine Drehachse des Kurbeltriebs drehbares erstes Fliehgewicht (61) und ein gegenläufig zu dem ersten Fliehgewicht (61) drehbares zweites Fliehgewicht (59) aufweist:
**dadurch gekennzeichnet, daß** das zweite Fliehgewicht (59) um eine im wesentlichen koaxial zur Drehachse des Kurbeltriebs angeordnete Drehachse drehbar angeordnet ist.

2. Arbeitsgerät nach Anspruch 1, **dadurch gekennzeichnet, daß** das Schwungmoment und die gegenseitige Phasenlage der beiden Fliehgewichte (59, 61) derart eingerichtet sind, daß die Fliehgewichte eine der durch die Bewegung der Arbeitsmasse (12) hervorgerufene Bewegung der Obermasse entgegen wirkende Schwingung erzeugen.

3. Arbeitsgerät nach Anspruch 1 oder 2, **dadurch gekennzeichnet, daß** die Drehachse des zweiten Fliehgewichts (59) relativ zu der Drehachse des Kurbeltriebs in der Bewegungsrichtung der Arbeitsmasse (12) etwas versetzt angeordnet ist.

4. Arbeitsgerät nach einem der vorstehenden Ansprüche, **dadurch gekennzeichnet, daß** die Bewegung des Kurbeltriebs über ein eine Antriebswelle (22) des Kurbeltriebs umgreifendes Pleuel (32) übertragbar ist.

5. Arbeitsgerät nach Anspruch 4, **dadurch gekennzeichnet, daß** das Pleuel (32) eine Pleuelstange mit einer in der Kraftübertragungslinie des Pleuels angeordneten Ausnehmung aufweist.

6. Arbeitsgerät nach Anspruch 4 oder 5, **dadurch gekennzeichnet, daß** das erste (61) und das zweite (59) Fliehgewicht durch die Antriebswelle (22) drehend angetrieben werden.

7. Arbeitsgerät nach Anspruch 2, **dadurch gekennzeichnet, daß** die durch die Fliehgewichte (59, 61) erzeugte Schwingung um einen Wert ungleich 180° phasenverschoben gegenüber der Bewegung der Arbeitsmasse (12) ist.

8. Arbeitsgerät, mit
- einer Arbeitsmasse (12), die von einem zu einer Obermasse gehörenden Motor (20) über einen Kurbeltrieb (26, 28, 30) und einen Federsatz linear hinund hergehend antreibbar ist; und mit
- einer Gegenmasse (40; 40₁; 40a₂, 40b₂), die, durch den Motor (20) angetrieben, bewegbar ist;
**dadurch gekennzeichnet, daß** die Gegenmasse (40; 40₁; 40a₂, 40b₂) parallel zu der Bewegungsrichtung der Arbeitsmasse (12) mit einer Phasenverschiebung ungleich 180° relativ zu der Bewegung der Arbeitsmasse linear hin- und herbewegbar ist.

9. Arbeitsgerät nach Anspruch 8, **dadurch gekennzeichnet, daß** die Gegenmasse (40; 40₁; 40a₂, 40b₂) von einem Ausgleichsexzenter (30; 30₁; 30a₂, 30b₂) am Kurbeltrieb angetrieben ist.

10. Arbeitsgerät nach Anspruch 8, **dadurch gekennzeichnet, daß** die Gegenmasse aus zwei Teilmassen (40a₂, 40b₂) besteht, die jeweils von einem Exzenterzapfen (30a₂, 30b₂) an einer jeweils zugeordneten, mit dem Kurbeltrieb drehbar gekoppelten Exzenterscheibe (37, 39) angetrieben sind.

## Claims

1. Working tool, having
- a working mass (12) which can be driven linearly in a reciprocating manner by a motor (20), which is associated with an upper mass, by way of a crank drive (26₅, 28, 30); and having
- a counter mass (59, 61) which can be driven in a rotating manner by the motor (20) and can be produced by one force which is opposed to a force which acts upon the upper mass by means of the movement of the working mass (12), wherein the counter mass comprises a first centrifugal weight (61), which can be rotated about an axis of rotation of the crank drive, and a second centrifugal weight (59) which can be rotated in the opposite direction to the first centrifugal weight (61):
**characterised in that** the second centrifugal weight (59) is disposed in such a manner as to be able to rotate about an axis of rotation disposed substantially coaxially with respect to the axis of rotation of the crank drive.

2. Working tool according to claim 1, **characterised in that** the flywheel effect and the mutual phase position of the two centrifugal weights (59, 61) are arranged in such a manner that the centrifugal weights generate an oscillation which counteracts the movement of the upper mass as produced by the movement of the working mass (12).

3. Working tool according to claim 1 or 2, **characterised in that** the axis of rotation of the second centrifugal weight (59) is disposed slightly offset relative to the axis of rotation of the crank drive in the direction of movement of the working mass (12).

4. Working tool according to any one of the preceding claims, **characterised in that** the movement of the crank drive can be transmitted via a connecting rod (32) which encompasses a drive shaft (22) of the crank drive.

5. Working tool according to claim 4, **characterised in that** the connecting rod (32) comprises a drive rod with an aperture disposed in the power transmission line of the connecting rod.

6. Working tool according to claim 4 or 5, **characterised in that** the first (61) and the second (59) centrifugal weight are driven in a rotating manner by means of the drive shaft (22).

7. Working tool according to claim 2, **characterised in that** the oscillation generated by the centrifugal weights (59, 61) is phase-shifted by value not equal to 180° with respect to the movement of the working mass (12).

8. Working tool, having
- a working mass (12) which can be driven linearly in a reciprocating manner by a motor (20), which is associated with an upper mass, by way of a crank drive (26, 28, 30) and a set of springs; and having
- a counter mass (40; 40₁; 40a₂, 40b₂) which can be moved as driven by the motor (20); **characterised in that** the counter mass (40; 40₁; 40a₂, 40b₂) can be moved linearly in a reciprocating manner in parallel with the direction of movement of the working mass (12) with a phase-shift not equal to 180° relative to the movement of the working mass.

9. Working tool according to claim 8, **characterised in that** the counter mass (40; 40₁; 40a₂, 40b₂) is driven by a compensating eccentric (30; 30₁; 30a₂, 30b₂) on the crank drive.

10. Working tool according to claim 8, **characterised in that** the counter mass consists of two partial masses (40a₂, 40b₂) which are each driven by an eccentric journal (30a₂, 30b₂) on a respectively allocated eccentric disc (37, 39) which is coupled in a rotatable manner to the crank drive.

## Revendications

1. Outil comportant
- une masse de travail (12) qui peut être entraînée linéairement dans un sens et dans l'autre par un moteur (20) qui fait partie d'une masse supérieure, par l'intermédiaire d'un mécanisme à manivelle (26₅, 28, 30) ; et comportant
- une contre-masse (59, 61) qui peut être entraînée en rotation par le moteur (20) et au moyen de laquelle peut être produite une force opposée à la force qui s'exerce sur la masse supérieure, du fait du mouvement de la masse de travail (12), la contre-masse comportant une première masselotte (61) qui peut tourner autour d'un axe de rotation du mécanisme à manivelle ainsi qu'une deuxième masselotte (59) qui peut tourner en sens contraire à la première masselotte (61) ;
**caractérisé en ce que** la deuxième masselotte (59) est disposée de manière à pouvoir tourner autour d'un axe de rotation qui est sensiblement coaxial à l'axe de rotation du mécanisme à manivelle.

2. Outil selon la revendication 1, **caractérisé en ce que** le moment d'inertie et la relation réciproque des phases des deux masselottes (59, 61) sont telles que les masselottes produisent une oscillation agissant à l'encontre du mouvement de la masse supérieure, provoqué par le mouvement de la masse de travail (12).

3. Outil selon la revendication 1 ou 2, **caractérisé en ce que** l'axe de rotation de la deuxième masselotte (59) est disposé légèrement décalé par rapport à l'axe de rotation du mécanisme à manivelle, dans le sens de déplacement de la masse de travail (12).

4. Outil selon l'une des revendications précédentes, **caractérisé en ce que** le mouvement du mécanisme à manivelle peut être transmis par l'intermédiaire d'une bielle (32) qui entoure un arbre d'entraînement (22) du mécanisme à manivelle.

5. Outil selon la revendication 4, **caractérisé en ce que** la bielle (32) comporte une tige de bielle avec un évidement disposé dans la ligne de transmission des forces de la bielle.

6. Outil selon la revendication 4 ou 5, **caractérisé en ce que** la première masselotte (61) et la deuxième masselotte (59) sont entraînées en rotation par l'arbre d'entraînement (22).

7. Outil selon la revendication 2, **caractérisé en ce que** l'oscillation, provoquée par les masselottes (59, 61), est déphasée d'une valeur différente de 180°, par rapport au déplacement de la masse de travail (12).

8. Outil comportant
- une masse de travail (12) qui peut être entraînée linéairement dans un sens et dans l'autre par un moteur (20) faisant partie d'une masse supérieure, par l'intermédiaire d'un mécanisme à manivelle (26, 28, 30) et un jeu de ressorts ; et comportant
- une contre-masse (40 ; 40₁ ; 40a₂, 40b₂) qui est déplaçable, entraînée par le moteur (20);
**caractérisé en ce que** la contre-masse (40; 40₁; 40a₂, 40b₂) est déplaçable linéairement dans un sens et dans l'autre, parallèlement à la direction de déplacement de la masse de travail (12), avec un déphasage différent de 180°, par rapport au déplacement de la masse de travail.

9. Outil selon la revendication 8, **caractérisé en ce que** la contre-masse (40 ; 40₁ ; 40a₂, 40b₂) est entraînée par un excentrique de compensation (30 ; 30₁ ; 30a₂, 30b₂) sur le mécanisme à manivelle.

10. Outil selon la revendication 8, **caractérisé en ce que** la contre-masse est constituée de deux masses partielles (40a₂, 40b₂) qui sont entraînées chacune par un axe d'excentrique (30a₂, 30b₂) sur un disque excentrique (37, 39) respectivement associé, accouplé en rotation au mécanisme à manivelle.
